# EUROPEAN PATENT APPLICATION

(11) **EP 0 577 892 A1**
(43) Date of publication of application: **12.01.1994**
(21) Application number: 92306362.2
(22) Date of filing: 10.07.1992
(51) Int. Cl.: B60J 7/06

(54) **Cover**

(71) Applicant: Smith, John, Cuffley, Herts EN6 4RR (GB); Eastlake, David, Huntingdon, Cambs PE18 8NW (GB)
(72) Inventor: Smith, John, Cuffley, Herts EN6 4RR (GB); Eastlake, David, Huntingdon, Cambs PE18 8NW (GB)
(74) Representative: Pattullo, Norman

(57) **Abstract**

A cover for use on a vehicle having a sheet (2) of flexible material movable from an extended to a stored position and which folds in the stored position with the assistance of resilient springs (20).

## Description

This invention relates to a cover.

Commercial transport vehicles for transporting large items require unobstructed access to the storage area in order to load and remove large items therefrom. The use of removable covers to form the walls and roof of these storage areas is known in the construction of such vehicles and the cover is removed to allow free access to the storage area when loading and unloading articles.

Removable covers generally comprise either solid sliding panels or flexible fabric sheets which extend over a framework around the storage area.

The framework generally comprises scissor like arms which extend along the side walls of the storage area and can be compacted such that the framework (and therefore the fabric cover) is compressed in a longitudinal direction thereby allowing access to the sides of the storage area.

Both of these systems involve the use of heavy components thereby reducing the commercial vehicle payload and are expensive to manufacture. In addition, the operation of the above system is slow and difficult and considerable effort is expended in folding or sliding the cover to expose the storage area.

The present invention provides a cover for use on a vehicle comprising a sheet of flexible material selectively movable between an extended and a stored configuration, supporting members attached to the sheet of flexible material, and resilient folding means to assist in moving the sheet of flexible material, the resilient folding means storing energy in the extended configuration and releasing the stored energy during movement of the sheet of flexible material from the extended to the stored configuration.

The resilient folding means preferably comprises a plurality of resilient springs.

Preferably, the resilient springs each comprise first and second flexible strips which lie along one another and are attached to each other at spaced locations, the distance along the first strip between adjacent attachment locations being different from the distance along the second strip between the same attachment locations.

The resilient springs may form an integral part of the sheet of flexible material, or may be disposed in pockets in the sheet of flexible material, or may lie along the sheet of flexible material.

Preferably, the supporting members are disposed at intervals across the long axis of the sheet of flexible material and terminate in a rolling or sliding connection. This may be in the form of wheels which run in a track which is perpendicular to the supporting members and is fixed to the structure being covered.

An embodiment of the present invention will be described with reference to the accompanying drawings in which:
Fig 1 shows a cover of the invention in an unfolded configuration;
Fig 2 shows the cover of Fig 1 in a folded configuration;
Fig 3 shows a supporting member, wheel and track of the cover shown in Fig 1; and
Fig 4 shows a resilient spring of the cover shown in Fig 1.

A cover according to one embodiment of the invention forms the roof 1 of the storage area of a lorry (not shown). The cover has a flexible sheet 2 of polyvinylchloride which is attached to, and is supported by, ribs 5 which extend between the two edges 3, 4 of the sheet 2 perpendicular to its long axis (indicated by the arrow 6).

At each end of each rib 5 there are two wheels 10 which rest on tracks 15 extending along two sides of the frame (not shown) surrounding the storage area. The wheels 10 are mounted on axles 11 passing through the ribs 5 such that the axles 11 are free to move along their axes relative to the rib 5. This allows small movements of the frame to occur without inducing removal of the wheels 10 from the tracks 15.

The wheels 10 can travel in the tracks 15 and hence the ribs 5 can move relative to one another in a direction parallel to the long axis 6 of the sheet 2. Rotation of the ribs 5 during motion is prevented by the provision of two wheels 10 in tandem.

Gutters 16 are provided to collect water passing between the sheet 2 and the tracks 15. Water collecting in the gutters 16 escapes through drains in the front and rear corner pillars 17.

The resilient folding means are provided by bi-leafed springs 20 consisting of two polypropylene leaves 21, 22 which lie along one another and are joined together by rivets 23 to form an arc of predetermined radius.

Application of force to compact or stretch the spring 20 results in storage of energy by the spring 20 which is released when the distorting force is removed and the spring 20 resumes its predetermined radius.

The springs 20 are inserted into pockets 25 which are disposed parallel to the long axis of the sheet 2 and between the ribs 5 such that all springs are arranged in the same orientation with the two ends 23, 24 of each spring pointing downwards.

Thus the springs continually exert a force which acts to lift the sections of the roof 1 between the ribs 5 upwardly from the plane of the ribs 5.

The sheet 2 is permanently attached at 30 to the front of the frame of the vehicle's storage area. The sheet 2 terminates at the other end in a rigid panel 35 which remains perpendicular to the tracks 15 when the wheels 10 are in motion in the tracks 15. This prevents jamming of the cover during folding.

The rigid panel 35 locks to the frame (not shown) at the rear of the storage area.

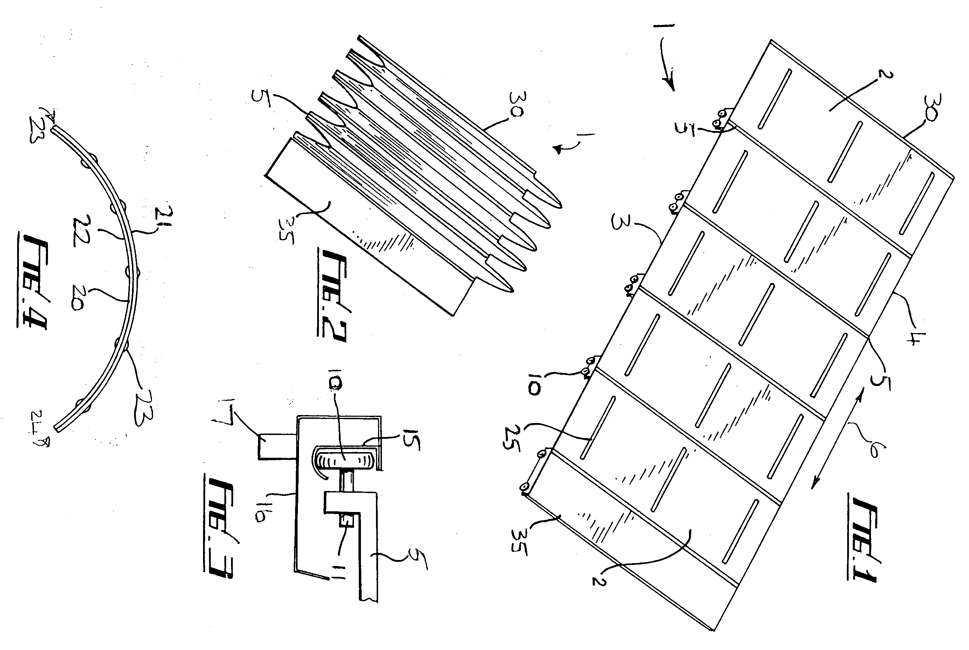

In use, the roof 1 in the unfolded position with the lock (not shown) engaged is stretched taut along the top of the storage area of the vehicle as shown in Fig 1. Thus the springs 20 are stretched to have a larger radius and thus store energy. To open the roof 1, the lock is released and the roof is pushed manually towards the front of the vehicle. Thus tension in the springs 20 is reduced and each moves to resume its predetermined radius, assisting in the retraction of the roof to its open configuration. Thus the cover folds to conform with the released springs 20 as shown in Fig 2.

Modifications and improvements may be incorporated without departing from the scope of the invention.

## Claims

1. A cover for use on a vehicle comprising a sheet of flexible material selectively movable between an extended and a stored configuration, supporting members attached to the sheet of flexible material, and resilient folding means to assist in moving the sheet of flexible material, the resilient folding means storing energy in the extended configuration and releasing the stored energy during movement of the sheet of flexible material from the extended to the stored configuration.

2. A cover according to Claim 1 wherein the resilient folding means comprises a plurality of resilient springs.

3. A cover according to Claim 2 wherein the resilient springs each comprise first and second flexible strips which lie along one another and are attached to each other at spaced locations, the distance along the first strip between adjacent attachment locations being different from the distance along the second strip between the same attachment locations.

4. A cover according to Claims 2 or 3 wherein the resilient springs are of polypropylene.

5. A cover according to Claims 2, 3 or 4 wherein the resilient springs form an integral part of the sheet of flexible material.

6. A cover according to Claims 2, 3 or 4 wherein the resilient springs are disposed in pockets in the sheet of flexible material.

7. A cover according to Claims 2, 3 or 4 wherein the resilient springs are welded to the sheet of flexible material.
